# EUROPÄISCHE PATENTSCHRIFT

(11) **EP 3 337 358 B1**
(45) Veröffentlichungstag und Bekanntmachung des Hinweises auf die Patenterteilung: **09.10.2019**
(21) Anmeldenummer: 16751286.2
(22) Anmeldetag: 10.08.2016
(51) Int. Cl.: A47G 1/17, F16B 33/02, F16B 37/04, F16B 2/00, F16B 11/00

(54) **HALTEVORRICHTUNG ZUR KLEBENDEN BEFESTIGUNG AN EINER OBERFLÄCHE MIT EINEM ZUGEORDNETEN BEFESTIGUNGSELEMENT**
HOLDING DEVICE FOR ADHESIVE FASTENING TO A SURFACE, HAVING AN ALLOCATED FASTENING ELEMENT
DISPOSITIF DE RETENUE DESTINÉ À UNE FIXATION ADHÉSIVE SUR UNE SURFACE À L'AIDE D'UN ÉLÉMENT DE FIXATION ASSOCIÉ

(30) Priorität: 21.08.2015 DE 102015215992
(43) Veröffentlichungstag der Anmeldung: 27.06.2018
(73) Patentinhaber: tesa SE, 22848 Norderstedt (DE)
(72) Erfinder: FASTERMANN, Franz, 25337 Elmshorn (DE); MASSON, Martje, 20148 Hamburg (DE); WEIGL, Robert, 22117 Hamburg (DE)
(86) Internationale Anmeldenummer: PCT/EP2016/069011
(87) Internationale Veröffentlichungsnummer: WO 2017/032601

(56) Entgegenhaltungen:
- CN-U- 203 041 774
- US-A- 4 292 876
- US-A- 5 516 581
- US-A1- 2011 120 439

## Beschreibung

Die vorliegende Erfindung betrifft eine Haltevorrichtung zur klebenden Befestigung an einer Oberfläche mit einem Haltekörper und einem zugeordneten Befestigungselement, wobei der Haltekörper eine Basisplatte mit einer Rückfläche und einen über die Basisplatte hervorstehenden Gewindebolzen aufweist, wobei das Befestigungselement an dem Gewindebolzen des Haltekörpers anbringbar ist.

Klebend befestigbare Haltekörper, wie beispielsweise selbstklebende Haken, sind aus dem Stand der Technik bekannt und werden beispielsweise benutzt, um Gegenstände wie Küchenutensilien oder Handtücher an Wänden aufzuhängen. Jedoch können nicht alle Gegenstände an einem einfachen hakenförmigen Vorsprung angehängt werden. Für Gegenstände oder Wandablagen wie Schlüsselbretter oder Gewürzboards, die nicht regelmäßig abgenommen werden und die in der Nähe ihrer Berandung flächige Elemente mit Bohrungen oder Langlöchern besitzen, sind zur Wandmontage Schraubverbindungen besser geeignet. Dabei ist es üblich, ein Innengewinde in Form eines in der tragfähigen Wand versenkten Dübels bereitzustellen. Eine Schraube, welche die Bohrung des Gegenstands durchdringt, kann in den Dübel gedreht werden, um den Gegenstand zu fixieren. Nachteilig an einer solchen Lösung ist jedoch, dass Löcher in die Wand gebohrt werden müssen. Gerade bei gefliesten Oberflächen oder frisch sanierten Wänden kann dies zu massiven optischen Beeinträchtigungen führen.

In diesen Fällen bieten sich Haltevorrichtungen an, die durch doppelseitig selbstklebende Klebestreifen an einer Oberfläche angebracht werden können und eine Schraubverbindung bereitstellen. Aus EP 1 945 073 B1 ist eine Haltevorrichtung bekannt, die mit einem doppelseitigen klebenden Klebestreifen an einer Wand befestigt werden kann. Die Haltevorrichtung weist eine Grundplatte mit einer ebenen Rückfläche und einer Vorderfläche auf, die mit einer gewindetragenden Hülse verbindbar ist. Um die Hülse sind Halteelemente angeordnet. Mittels einer Gewindeschraube kann ein Profil zwischen den Halteelementen und dem Kopf der Gewindeschraube festgeklemmt werden.

KR 2011 0 101 490 A lehrt eine Haltevorrichtung in Form einer selbstklebenden Scheibe, von der sich in axialer Richtung ein geschlitzter Gewindebolzen mit einer zentralen Bohrung erstreckt. Speziell angepasste Gegenstände und Halterungen können verdrehsicher an dem Bolzen befestigt und mit einer speziellen Gewindemutter gesichert werden.

Aus CN 203 041 774 U ist eine rückseitig selbstklebend ausgerüstete Platte aus PVC oder ähnlichem Material bekannt. Von der Vorderfläche der Platte erstrecken sich in Richtung der Flächennormalen ein oder mehrere Gewindebolzen, auf die Gewindemuttern aufgeschraubt werden können.

Nachteilig an den bekannten Lösungen ist jedoch, dass sich die Gewindeschrauben oder die Gewindemutter nur schraubend auf das gewindetragende Gegenstück montieren lassen. Wenn sich die Gewindeschraube oder die Gewindemutter ausschließlich entlang der Gewindegänge des Gegenstücks auf einer Schraubenlinie bewegen kann, ist eine bestimmte Anzahl von Drehungen notwendig, bis die Gewindeschraube oder Gewindemutter am zu befestigenden Gegenstand anschlägt. Dazu können sich schon bei relativ kleinen Gewindedurchmessern von beispielsweise 5 mm so hohe Anzugsdrehmomente ergeben, dass die Verklebung der Haltevorrichtung beschädigt werden kann.

Aufgabe der Erfindung ist es, eine Haltevorrichtung bereitzustellen, bei der das Befestigungselement zur Fixierung eines an dem Haltekörper aufgehängten Gegenstands besonders einfach und leicht montiert werden kann und zudem das Anzugs- bzw. Abzugsmoment des Befestigungselements begrenzt ist.

Die Erfindung wird mit einer Haltevorrichtung sowie mit einem Haltekörper gemäß dem unabhängigen Anspruch gelöst. Erfindungsgemäß ist vorgesehen, dass die Haltevorrichtung zur klebenden Befestigung an einer Oberfläche einen Haltekörper und ein zugeordnetes Befestigungselement umfasst, wobei der Haltekörper eine Basisplatte mit einer vorzugsweise ebenen Rückfläche und einen aus der Basisplatte hervorstehenden Gewindebolzen aufweist, wobei das Befestigungselement an dem Gewindebolzen des Haltekörpers anbringbar ist. Das Befestigungselement weist eine durchgängige Öffnung auf und ist zumindest im Bereich der Öffnung elastisch ausgebildet, wobei die Öffnung einen Innendurchmesser aufweist, welche im Verhältnis zum Außendurchmesser des Gewindebolzens derart ausgestaltet ist, dass sich das Befestigungselement auf den Gewindebolzen sowohl durch eine lineare Bewegung aufstecken bzw. abziehen als auch durch eine drehende Bewegung aufschrauben bzw. abschrauben lässt. Dadurch wird eine besonders einfache Fixierung eines an dem Gewindebolzen aufgehängten Gegenstands erreicht, indem das Befestigungselement zur Fixierung ohne großen Kraft- und Zeitaufwand auf den Gewindebolzen aufgesteckt werden kann. Somit ist eine Schnellmontage des Befestigungselements möglich.

Dabei wird beim Aufstecken eine Kraft ausgeübt, die zumindest weitestgehend in Richtung einer Normalen durch die Basisplatte in Richtung der Oberfläche gerichtet ist, so dass der Haltekörper bzw. die Haltevorrichtung an die Oberfläche angedrückt werden, was die Klebeverbindung schont bzw. sogar durch das zusätzliche Andrücken stärkt. Gleichzeitig können durch das zumindest im Bereich der Öffnung elastisch ausgestaltete Befestigungselement auf diese Weise die beim Abziehen auftretenden Kräfte, welche potenziell den Klebeverbund schwächen, begrenzt werden. Ferner können die Torsionsspannungen, welche beim Auf- oder Abschrauben des Befestigungselements entstehen und den Klebeverbund ebenfalls schwächen, begrenzt werden.

Dabei ist es für die erfindungsgemäße Lösung vorgesehen, dass das Befestigungselement im Bereich der Öffnung elastisch ausgebildet ist, damit das Befestigungselement im Bereich der Öffnung mit einer Kontur versehen werden kann, welche beim Auf- und Abschrauben in das Gewinde des Gewindebolzens eingreift und damit eine formschlüssige Verbindung bildet, während diese sich beim Aufstecken und Abziehen unter Ausnutzung ihrer Elastizität soweit verformt, dass sie über das Gewinde des Gewindebolzens hinweggleitet und dadurch die Aufschiebe- und Abzugsbewegung ermöglicht.

Durch die in den abhängigen Ansprüchen aufgeführten Maßnahmen sind vorteilhafte Weiterbildungen und Verbesserungen der im unabhängigen Anspruch angegebenen Haltevorrichtung möglich.

Gemäß der Erfindung ist vorgesehen, dass das Befestigungselement durch eine Kraft derart verformbar ist, dass sich das Befestigungselement in einem verformten Zustand der Öffnung auf den Gewindebolzen aufstecken bzw. abziehen lässt und in einem unverformten Zustand der Öffnung auf den Gewindebolzen aufschrauben bzw. abschrauben lässt. Im unverformten Zustand können nur geringe Kräfte übertragen werden, so dass die Schraubkräfte durch die Elastizität des Befestigungselements im Bereich der Öffnung begrenzt sind. Durch eine Verformung kann die Öffnung des Befestigungselements vergrößert werden, so dass das Aufstecken und/oder das Abziehen erleichtert werden.

Gemäß der Erfindung ist vorgesehen, dass das Befestigungselement aus einem Elastomer hergestellt ist. Elastomere lassen sich einfach und wirtschaftlich in einem Spritzgussverfahren herstellen. Besonders bevorzugt sind dabei thermoplastische Elastomere, insbesondere Polyurethan, welche eine gute Abriebbeständigkeit, eine hohe UV-Beständigkeit sowie einen vergleichsweise hohen Weiterreißwiderstand aufweisen.

Erfindungsgemäß wird ein Elastomer mit einer Shore-A Härte zwischen 58 und 94 verwendet. Damit liegt die Härte oberhalb einer Shore-A Härte der menschlichen Fingerbeere, wodurch das Material zum einen hinreichend fest ist, um ein einfaches Handling während der Montage zu ermöglichen und zum anderen ausreichend elastisch, um die in den vorhergehenden Abschnitten beschriebenen Vorteile zu erzielen.

Erfindungsgemäß ist vorgesehen, dass eine die durchgängige Öffnung begrenzende Innenfläche des Befestigungselements ein Profil einer Wendelrippe aufweist. Die Wendelrippe stellt dabei ein nach innen vorspringendes Profil dar, wodurch der Eingriffsbereich zwischen Befestigungselement und Gewindebolzen auf den Bereich der Wendelrippe beschränkt ist. Durch die reduzierten Eingriffsbereiche können sowohl die Kräfte beim Auf- bzw. Abziehen als auch die Momente beim Auf- bzw. Abschrauben reduziert werden. Besonders vorteilhaft ist dabei, wenn das Profil auf einer Schraubenlinie mit der Steigung P und einem Winkelbereich ϕ von mindestens 270° und maximal 360° um eine Achse des Befestigungselements ausgebildet ist.

Gemäß einer vorteilhaften Weiterbildung ist vorgesehen, dass der Gewindebolzen ein Außengewinde mit einer Steigung P kleiner 1,5 mm, vorzugsweise einer Steigung zwischen 0,25 mm und 1 mm aufweist. Dabei entspricht der Gewindeprofilwinkel α des Gewindebolzens vorzugsweise dem Gewindeprofilwinkel β der Wendelrippe. Durch eine vergleichsweise geringe Steigung können die Schraubmomente zum Erreichen einer definierten Vorspannkraft reduziert werden.

Gemäß einer weiteren vorteilhaften Weiterbildung ist vorgesehen, dass sich das Befestigungselement mit einer Zugkraft F2 von zwischen minimal [2n x B] N/cm und [10n x B] N/cm abziehen lässt, wobei n die Anzahl der verwendeten doppelseitig selbstklebenden Klebestreifen und B die Breite eines der doppelseitig selbstklebenden Klebestreifen einer vorgegebenen Länge L ist. Dabei wird angenommen, dass der Haltekörper mittels standarisierter Klebestreifen mit vorgegebener Länge L und vorgegebener Breite B an einer Oberfläche fixiert wird, wobei die Länge L vorzugsweise der Längsausdehnung des Haltekörpers entspricht. Des Weiteren wird angenommen, dass die das Befestigungselement an gegenüberliegenden Außenbereichen ergreifenden Fingerbeeren eine senkrecht zu der Richtung der Zugkraft F2 orientierte Kraft ausüben, die ausreichend ist, um das Befestigungselement beim Abziehen von dem Gewindebolzen zu halten. Diese ausreichende radiale Haltekraft F2 kann beispielsweise 10 N oder mehr betragen. Durch den oberen Grenzwert kann verhindert werden, dass sich der selbstklebende Klebestreifen beim Abziehen des Befestigungselements von der Oberfläche ablöst. Durch den unteren Grenzwert wird sichergestellt, dass eine hinreichende Kraft benötigt wird, um das Befestigungselement abzuziehen, so dass dieses axial wirkende Kräfte aufnehmen kann und nicht durch eine zufällige Berührung abfällt.

Gemäß einer weiteren vorteilhaften Weiterbildung ist vorgesehen, dass der doppelseitig selbstklebende Klebestreifen eine Breite B und eine Länge L aufweist, wobei die Länge L größer als die Breite B ist, und ein Außengewinde des Gewindebolzens eine Steigung von 0,01 x L aufweist. Durch die Wahl der Steigung können die Momente beim Aufschrauben bzw. Abschrauben des Befestigungselements beeinflusst werden. Durch eine Steigung von maximal 0,01 x L können diese Momente derart begrenzt werden, dass an der Klebestelle keine unzulässig hohen Momente auftreten, die zu einer Beschädigung der Oberfläche und/oder zu einem Versagen des Klebeverbunds führen können.

Gemäß einer weiteren vorteilhaften Ausführungsform ist vorgesehen, dass ein zum Aufschrauben oder Abschrauben des Befestigungselements notwendiges Drehmoment maximal [100n x B] N beträgt, wobei n die Anzahl der doppelseitig selbstklebenden Klebestreifen und B die Breite eines der doppelseitig selbstklebenden Klebestreifen ist. Dabei wird angenommen, dass die das Befestigungselement an gegenüberliegenden Bereichen ergreifenden Fingerbeeren eine radial zum Befestigungselement orientierte Kraft ausüben, die ausreichend ist, um das Befestigungselement beim Drehen auf dem Gewindebolzen festzuhalten. Diese ausreichende radiale Haltekraft kann beispielsweise 10 N oder mehr betragen.

Gemäß einer Weiterbildung der Erfindung ist vorgesehen, dass das Außengewinde des Gewindebolzens gegenüber einem Normgewinde eine verringerte Gewindeprofiltiefe aufweist. Durch eine verringerte Gewindeprofiltiefe können ebenfalls die Kräfte beim Aufstecken oder Abziehen des Befestigungselements sowie beim Auf- oder Abschrauben des Befestigungselements reduziert werden.

Gemäß einer weiteren vorteilhaften Weiterbildung ist vorgesehen, dass eine Tragplatte des Haltekörpers den Gewindebolzen trägt und gegenüber der Basisplatte relativ verschiebbar ist. Somit kann auch nach Fixieren des Haltekörpers noch eine Anpassung der Position des Gewindebolzens erfolgen. Besonders vorteilhaft ist dabei, wenn die Tragplatte gegenüber der Basisplatte entlang der Hauptlastrichtung, bei Montage an einer vertikalen Wand beispielsweise in vertikaler Richtung, verschiebbar ist, da somit eine Höhenanpassung eines an dem Haltekörper aufgehängten Gegenstands möglich ist. Dies ist insbesondere dann vorteilhaft, wenn der Gegenstand an zwei oder mehr Haltekörpern aufgehängt wird, da somit eine nachträgliche Anpassung der Höhenposition möglich ist und eine Abweichung der Höhenposition von zwei Haltekörpern nach dem Aufkleben der Haltekörper auf die Oberfläche nachträglich korrigiert werden kann.

Gemäß einer weiteren vorteilhaften Weiterbildung ist vorgesehen, dass ein äußeres Profil des Befestigungselements sägezahnförmig, dreiecksförmig oder doppeldreiecksförmig ausgebildet ist. Somit ergibt sich bei einer von außen aufgebrachten Kraft auf eine Mantelfläche des Befestigungselements eine Verformung, die diesem äußeren Profil ähnlich ist und somit ein Aufstecken oder Abziehen des Befestigungselements begünstigt.

Die Erfindung wird im Folgenden anhand bevorzugter Ausführungsformen unter Bezugnahme auf die beigefügten Figuren erläutert. Dabei zeigen
- Fig. 1: eine erfindungsgemäße Haltevorrichtung;
- Fig. 2: einen doppelseitig klebenden Klebestreifen;
- Fig. 3: eine Rückansicht eines erfindungsgemäßen Haltekörpers der Haltevorrichtung;
- Fig. 4: eine Frontansicht eines Haltekörpers einer erfindungsgemäßen Haltevorrichtung;
- Fig. 5: ein Befestigungselement einer erfindungsgemäßen Haltevorrichtung in perspekti vischer Ansicht;
- Fig. 6: das Befestigungselement aus Fig. 5 in der Aufsicht;
- Fig. 7: ein Profil eines Gewindebolzens eines Haltekörpers sowie des Befestigungsele ments im Achsschnitt;
- Fig. 8: ein Detailprofil des Gewindebolzens und des Befestigungselements;
- Fig. 9: eine alternative Ausführungsform des Befestigungselements in perspektivischer Darstellung;
- Fig. 10: eine Draufsicht auf das Befestigungselement aus Fig. 9;
- Fig. 11: eine weitere Ausführungsform eines Befestigungselements;
- Fig. 12: Profile mehrerer Ausführungsformen von Befestigungselementen;
- Fig. 13: ein Hilfsmittel zur Montage und Demontage eines Befestigungselements;
- Fig. 14: eine Draufsicht auf das Hilfsmittel aus Fig. 13;
- Fig. 15: einen Schnitt durch das Hilfsmittel aus Fig. 13;
- Fig. 16: ein Schema zum Zusammenwirken des Hilfsmittels mit einem Befestigungsele ment;
- Fig. 17: eine weitere Ausführungsform einer erfindungsgemäßen Haltevorrichtung;
- Fig. 18: ein Anwendungsbeispiel für eine erfindungsgemäße Haltevorrichtung;
- Fig. 19: eine seitliche Ansicht zur Veranschaulichung der radial wirkenden Griffkräfte;
- Fig. 20: eine schematische Darstellung des tridigitalen Präzisionsgriffs mit Daumen, Zeigefinger und Mittelfinger.

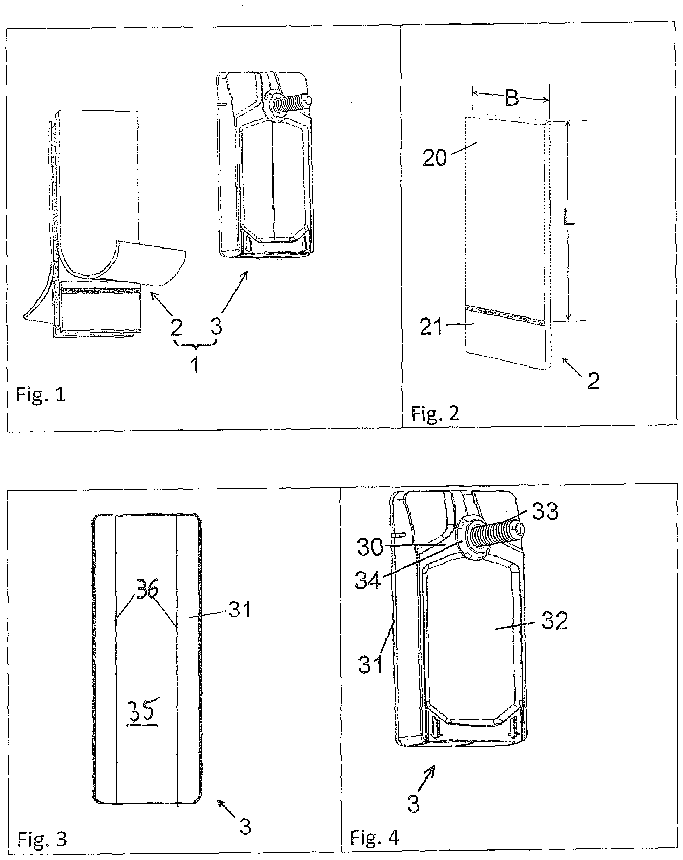

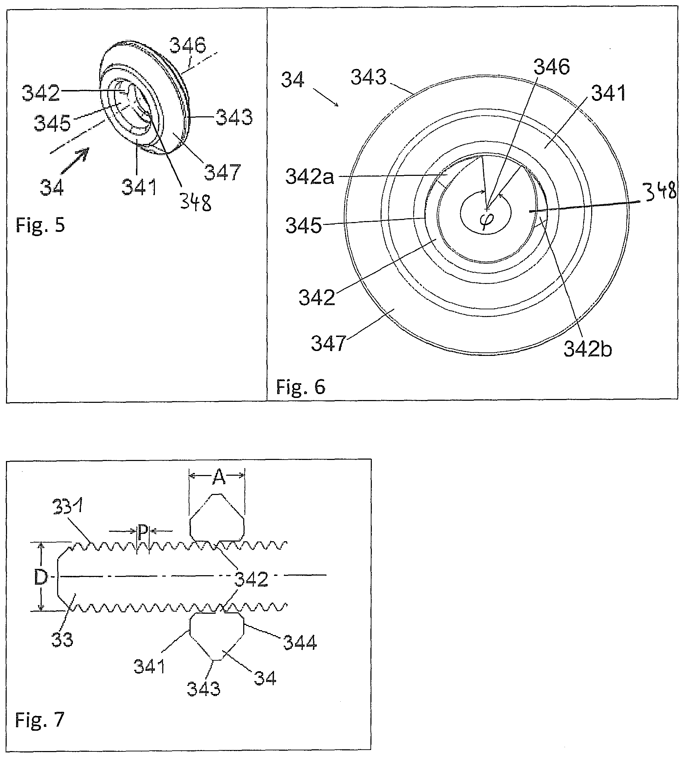

In Fig. 1 ist ein erstes Ausführungsbeispiel einer erfindungsgemäßen Haltevorrichtung 1 dargestellt. Die Haltevorrichtung 1 umfasst einen Haltekörper 3, einen doppelseitig selbstklebenden Klebestreifen 2 sowie ein in Fig. 5 dargestelltes Befestigungselement 34.

In Fig. 2 ist ein doppelseitig selbstklebender Klebestreifen 2 dargestellt. Der selbstklebende Klebestreifen 2 ist rechteckförmig mit einer Breite B und einer Länge L, wobei die Länge L größer als die Breite B ist. Gemäß einer bevorzugten Ausführungsform hat der selbstklebende Klebestreifen 2 eine maximale Breite von 24 mm und eine maximale Länge von 80 mm, bevorzugt eine Breite von max. 21 mm und eine Länge von max. 61 mm. Er besitzt zwei gegenüberliegende Hauptflächen 22, 23 und kann zugentklebbar ausgeführt sein. Zugentklebbare, doppelseitig selbstklebende Klebestreifen, welche sich nach einem dehnenden Verstrecken in Richtung eines Untergrunds wieder von diesem lösen lassen, sind bereits aus anderen Anwendungen aus dem Stand der Technik bekannt. Die sich gegenüberliegenden, rechteckförmigen, haftklebrigen Hauptflächen 22, 23 sind dabei jeweils von einer in Fig. 2 nicht gezeigten Schutzfolie bedeckt, die vor Gebrauch abgezogen wird. Ein Endbereich des Klebestreifens 2 kann nichtklebend ausgeführt sein, so dass ein mit der Hand greifbarer Anfasser 21 geschaffen wird. Dazu können auf gegenüberliegende Endbereiche der haftklebrigen Hauptflächen 22, 23 Abschnitte aus Kunststofffolie, Metallfolie oder Papier aufkaschiert sein. Zusätzlich kann der Anfasser 21 einen speziellen Träger, insbesondere einen Schaumträger, aufweisen, um die Griffigkeit des Anfassers 21 zu erhöhen.

Üblicherweise besitzen die haftklebrigen Hauptflächen 22, 23 gattungsgemäßer Klebestreifen 2 eine Länge von bis zu 86 mm und eine Breite von bis zu 24 mm und sind in einer Klebefuge zwischen einer Oberfläche und einem mittels des Klebestreifens 2 befestigten Gegenstand so verklebt, dass der nichtklebende Anfasser 21 für ein dehnendes Verstrecken zum Ablösen erreichbar bleibt. Der Anfasser 21 hat üblicherweise die gleiche Breite wie die haftklebrigen Hauptflächen 22, 23 und eine Länge von 3 mm bis 40 mm.

Während der Anwendung des Klebestreifens 2 wird zunächst die erste haftklebrige Hauptfläche 22 des doppelseitig selbstklebenden Klebestreifens 2 auf einer Oberfläche fest angedrückt, wobei die Längsseite des Klebestreifens 2 zumindest weitgehend parallel zur Hauptlastrichtung, beispielsweise der Gravitationsrichtung, ausgerichtet wird. Dann wird die gegenüberliegende, zweite haftklebrige Hauptfläche 23 mit einer Rückfläche 35 des Haltekörpers 3 klebend verbunden, indem der Haltekörper 3 auf diese zweite haftklebrige Hauptfläche 23 fest angedrückt wird.

Wie die Rückansicht des Haltekörpers 3 in Fig. 3 zeigt, umfasst der Haltekörper 3 eine Basisplatte 31 mit einer ebenen bzw. flachen Rückfläche 35, die als Klebefläche für einen doppelseitig selbstklebenden Klebestreifen 2 dient. Höhe und Breite der Basisplatte 31 sind so gewählt, dass sie die haftklebrigen Hauptflächen 22, 23 des zugehörigen doppelseitig selbstklebenden Klebestreifens 2 umschließen. In der Rückfläche 35 können ein oder mehrere Entlüftungskanäle 36 vorgesehen sein.

In Fig. 4 ist der Haltekörper 3 in einer Frontansicht dargestellt. Die Basisplatte 31 des Haltekörpers 3 ist mit einer Tragplatte 30 versehen. Von der Tragplatte 30 erstreckt sich ein Gewindebolzen 33, dessen Achse sich normal oder weitgehend normal zur Rückfläche 35 der Basisplatte 31 orientiert. Der Gewindebolzen 33 weist eine Wurzel auf, welche in der Tragplatte 30 liegt, sowie ein freies Ende.

Dabei weist der Gewindebolzen 33 einen Nenndurchmesser D und ein vorzugsweise eingängiges Gewinde 331 mit einer Steigung P auf, siehe Fig. 7. Dabei weist das Gewinde 331 eine Steigung P von max. 1,5 mm, bevorzugt zwischen 0,25 mm und 1 mm, auf. Die Wahl des Nenndurchmessers D orientiert sich an den aufzuhängenden Gegenständen. Vorteilhaft für leichte Haushaltsgegenstände sind Nenndurchmesser D von 2 mm bis 8 mm, vorzugsweise liegt der Nenndurchmesser D in einem Bereich zwischen 3 mm und 5 mm, besonders bevorzugt zwischen 3 mm und 4 mm. Die Basisplatte 31 ist mit der Tragplatte 30 und dem Gewindebolzen 33 einstückig als Spritzgussteil ausgebildet und somit unlösbar verbunden.

Fig. 5 zeigt ein Befestigungselement 34 einer erfindungsgemäßen Haltevorrichtung 1. Das Befestigungselement 34 ist nach Art einer Gewindemutter ausgebildet. Ein Grundkörper des Befestigungselements 34 entsteht, indem man gedanklich zwei identische kegelstumpfförmige Körper koaxial an ihren scheibenförmigen Grundflächen überdeckend verbindet, so dass ihre Deckflächen voneinander beabstandet sind. Koaxial durch beide Kegelstümpfe verläuft eine Ausnehmung mit einem kreisförmigen Querschnitt. Der Durchmesser der Grundfläche entspricht dem größten Außendurchmesser des Befestigungselements 34. Der in radialer Richtung gemessene Außendurchmesser nimmt ab, je weiter man sich auf einer axialen Koordinate von der Grundfläche der Kegelstümpfe entfernt. Die Deckfläche 341 des ersten Kegelstumpfes verläuft parallel zu der Deckfläche des zweiten Kegelstumpfes. Die Deckfläche 341 bildet gleichzeitig die in axialer Richtung äußeren Stirnflächen 341 des Befestigungselements 34.

Das Befestigungselement 34 kann im Bereich des maximalen Außenumfangs 343 abgeplattet sein. Der Durchmesser der zentralen Ausnehmung entspricht dem Nenndurchmesser des Gewindebolzens 33, und kann bis zu 10% davon nach oben oder nach unten abweichen. Die zentrale Ausnehmung wird radial von einer gekrümmten Innenfläche 345 begrenzt. Von dieser Innenfläche 345 erstreckt sich das Profil einer Wendelrippe 342 in die axiale Ausnehmung des Befestigungselements 34. Die Profilbasis der Wendelrippe 342 läuft entlang einer Schraubenlinie mit der Steigung P auf der Innenfläche des Befestigungselements 34 und überstreicht dabei einen Winkel ϕ zwischen 270° und 360° um die Achse 346 des Befestigungselements 34. Die Wendelrippe 342 kann kontinuierlich oder diskontinuierlich verlaufen und endet nach spätestens einem Umlauf entlang der Innenfläche 345. Das Befestigungselement 34 umfasst also insbesondere keine Gewindelücken oder Gewindenuten, wie sie zwischen mehreren Gewindegängen auftreten, und es existieren keine Bereiche der Wendelrippe 342, die sich in einer Richtung parallel zur Achse 346 überlappen. Durch diese fehlende Überlappung wird das Aufstecken bzw. Abziehen des Befestigungselements 34 begünstigt und insbesondere die Herstellung nach dem Umformverfahren vereinfacht.

Anfang und Ende der Wendelrippe 342 sind bezüglich der äußeren Stirnfläche axial nach innen versetzt und beginnen bzw. enden vorteilhaft mit einer Fase. Das Befestigungselement 34 ist aus einem Elastomer, bevorzugt einem thermoplastischen Elastomer, hergestellt.

Fig. 6 zeigt das Befestigungselement 34 in der Aufsicht, wobei die Blickrichtung mit der Achse 346 des Befestigungselements 34 zusammenfällt. Die Wendelrippe 342 erhebt sich von der Innenfläche 345 beginnend mit einer Fase 342a und nähert sich dem Betrachter entgegen dem Uhrzeigersinn. Nach Überstreichen eines im Winkelbereich zwischen 270° und 360° liegenden Winkels ϕ, welcher in dem gezeigten Ausführungsbeispiel 316° beträgt, endet die Wendelrippe 342 wieder mit einer Fase 342b. Die Innenfläche 345 grenzt radial nach außen an einen hohlzylindrischen Teil des Grundkörpers, der sich in der Aufsicht als kreisringförmige Stirnfläche 341 zeigt. Der radial äußere Bereich wird von Mantelflächen 347 gebildet. Den radial äußeren Abschluss bildet der Bereich des maximalen Außenumfangs 343, der etwa dem Doppelten des Nenndurchmessers D entspricht.

Fig. 7 zeigt im Achsschnitt einen Teil des Gewindebolzens 33 mit einem Nenndurchmesser D und einer Steigung P, sowie einen Teil des Befestigungselements 34. Das von der Innenfläche 345 des Befestigungselements 34 nach innen vorspringende Profil der Wendelrippe 342 liegt in dieser Ansicht in zwei axial um eine halbe Steigung P versetzt gegenüberliegenden Gewindelücken des Bolzengewindes 331. Die axiale Ausdehnung A der zylindrischen Innenfläche 345 ist identisch mit der maximalen Ausdehnung des Befestigungselements 34 in Achsrichtung und beträgt vorteilhaft mindestens das Dreifache der Steigung P.

Vorteilhaft liegt die Wendelrippe 342 in der Mitte zwischen den axial äußeren Stirnflächen 341, 344 des Befestigungselements 34. Das heißt, der parallel zur Achse 346 gemessene Abstand zwischen dem Anfang der Wendelrippe 342 und der nächstliegenden ersten Stirnfläche 341 entspricht dem entsprechenden Abstand zwischen dem Ende der Wendelrippe 342 und der nächstliegenden zweiten Stirnfläche 344. Alternativ kann die Projektion der Wendelrippe 342 mittig zwischen den Stirnflächen 341, 344 auf der Achse 346 liegen.

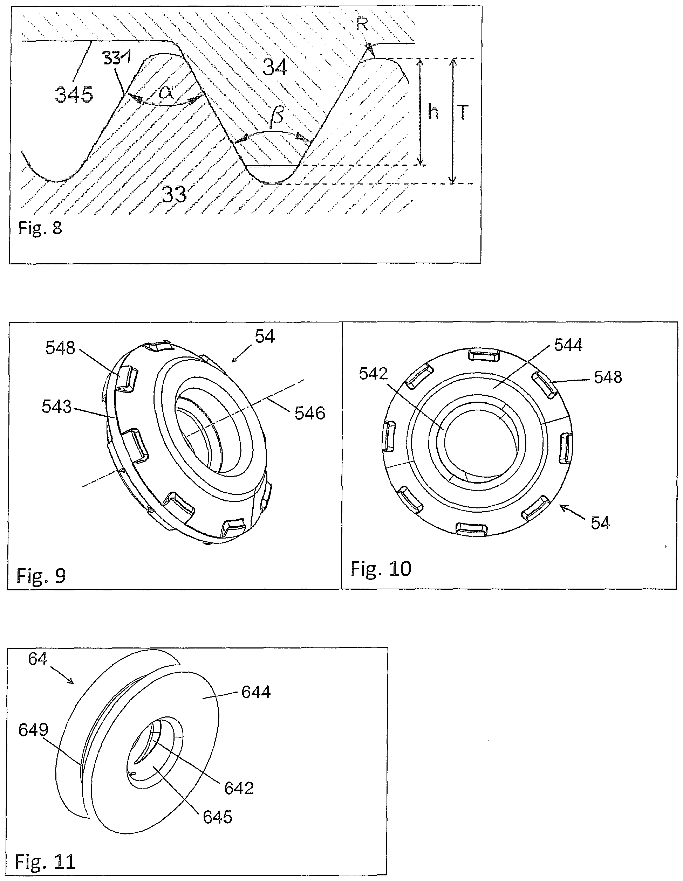

Fig. 8 zeigt ein Gewindeprofil des Gewindebolzens 33 und ein Profil der Wendelrippe 342 am Befestigungselement 34. Die Profile sind an ein metrisches ISO-Regelgewinde angelehnt, wie sie in ISO 1502 und DIN 13 beschrieben werden. Vorzugsweise hat die Wendelrippe 342 ein trapezförmiges Gewinde mit 60° Flankenwinkel. Alternativ ist ein Whitworth-Gewinde möglich. Der Gewindeprofilwinkel α des Bolzens 33 entspricht bevorzugt dem Gewindeprofilwinkel β der Wendelrippe 342 des Befestigungselements 34, wobei eine Abweichung von bis zu 20° möglich ist.

Im Unterschied zum metrischen ISO-Regelgewinde kann die Gewindetragtiefe h reduziert sein, indem am Bolzen 33 die Gewindeprofilhöhe T verringert ist. Die Gewindespitzen des Bolzengewindes 331 sind mit einem Radius R verrundet. Bevorzugt lässt sich auf das Bolzengewinde 331 zusätzlich oder stattdessen auch eine metallische Gewindemutter der entsprechenden Norm und mit passendem Nenndurchmesser D aufschrauben. Auch das Aufschrauben von zwei oder mehr elastischen Befestigungselementen 34 ist möglich.

Fig. 9 und Fig. 10 zeigen eine alternative Ausführungsform eines Befestigungselements 54. Das Befestigungselement 54 ist aus einem Elastomer, vorzugsweise aus einem thermoplastischen Elastomer, hergestellt. Von einem Außenring 543 erstrecken sich zusätzlich zu der oben beschriebenen Ausführung jeweils parallel zur Achse 546 liegende Rippen 548. Die Rippen 548 erstrecken sich ausgehend von dem Außenring 543 beidseits und sind in gleichbleibenden Winkelabständen um den Umfang des Befestigungselements 54 verteilt. Da die Handhabung des Befestigungselements 54 auch werkzeuglos zwischen den Fingerbeeren einer menschlichen Hand erfolgt, können die Rippen 548 als strukturgebende Elemente die Griffigkeit des Halteelements 54 erhöhen. Dies kann bei oberflächenglatten Elastomeren, wie beispielsweise Silikon-Elastomeren, vorteilhaft sein.

Durch eine Erhöhung der Haftreibung zwischen den Außenflächen des Befestigungselements 54 und den Fingerbeeren der menschlichen Hand verringert sich durch Griffanpassung die notwendige Haltekraft bei der Handhabung im Präzisionsgriff. In der Folge wird verhindert, dass das Befestigungselement 54 durch einen kräftigen Griff der Hand zu sehr gegen die Gewindegänge des Bolzens 33 gepresst wird, wodurch sich das manuell aufzubringende Moment beim Auf- oder Abschrauben und die notwendige Kraft beim Abziehen in axialer Richtung unerwünscht erhöhen würden.

In Fig. 11 ist eine weitere Ausführungsform eines Befestigungselements 64 gezeigt. Der Grundkörper des Befestigungselements 64 setzt sich aus zwei identischen rotationssymmetrischen Kegelstümpfen zusammen. Diesmal sind nicht die Grundflächen, sondern die Deckflächen der Kegelstümpfe aufeinanderliegend, überdeckend verbunden und die Grundflächen bilden entfernt voneinander die Stirnflächen 641, 644 des Befestigungselements 64. Das heißt, der Außenumfang des Befestigungselements 64 vergrößert sich bis zu den Stirnflächen 641, 644, je weiter man sich auf der Achse 646 des Befestigungselements 64 von der mittleren Deckfläche entfernt. Es ergibt sich eine mittlere Einschnürung 649 des Befestigungselements 64, und die Form des radial außenliegenden Profils ähnelt im Achsschnitt einer trapezförmigen Gewindelücke, die von zwei Dreiecken flankiert wird.

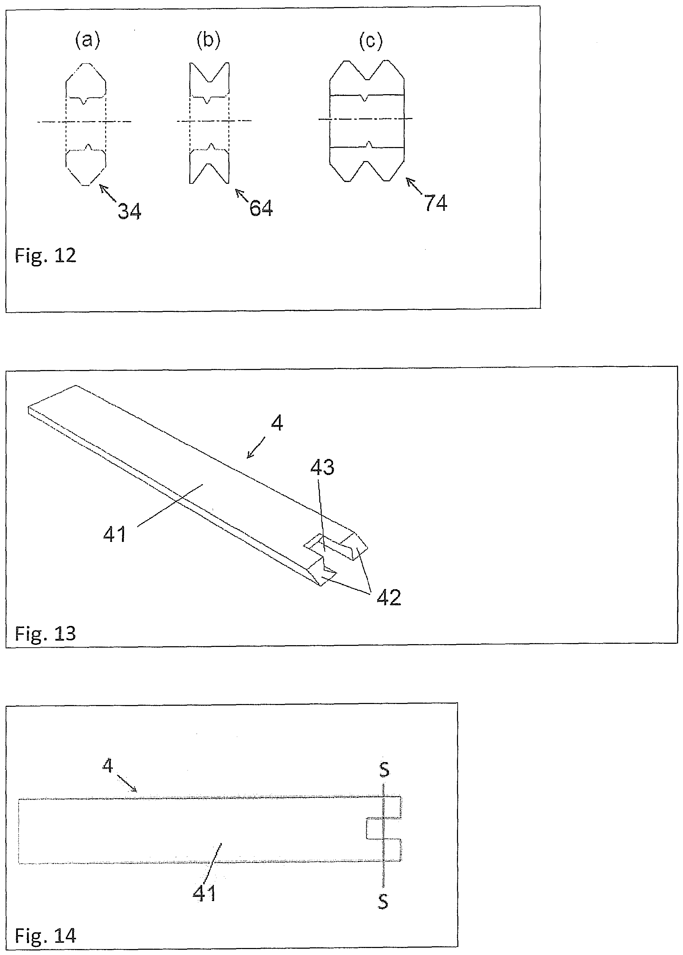

Fig. 12a bis Fig. 12c zeigen die im Achsschnitt entstehenden Profile verschiedener Ausführungsformen von Befestigungselementen 34, 64, 74. Die radial außenliegenden Profile der Befestigungselemente 34, 64, 74 umfassen jeweils rechtwinklige Dreiecke mit außenliegenden Hypotenusen. Die Hypotenusen stehen winklig zur Achse 346 und bilden am Befestigungselement 34, 64, 74 die außenliegenden Mantelflächen. Die Ausführungen werden nach dem Erscheinungsbild ihres äußeren Profils hier in Fig. 12a als Delta- oder Dreiecks-Profil, in Fig. 12b als M- oder Sägezahn-Profil, und in Fig. 12c als Doppel-Delta- oder Doppeldreiecks-Profil bezeichnet.

In Fig. 13 bis Fig. 16 ist ein Montagehilfsmittel 4, mit welchem bei Bedarf die Montage oder Demontage des Befestigungselements 34, 54, 64 unterstützt werden kann, gezeigt. Ein solches Montagehilfsmittel 4 ist insbesondere dann hilfreich, wenn ein Gegenstand, der an dem Haltekörper 3 montiert werden soll, den Gewindebolzen 33 verdeckt und das Aufschrauben oder Aufstecken des Befestigungselements 34, 54, 64, 74 erschwert. Das Montagehilfsmittel 4 weist, wie in Fig. 13 dargestellt, einen stabähnlichen Basiskörper 41 auf, welcher gleichzeitig als Handgriff dient. Der Basiskörper 41 besitzt zwei gegenüberliegende Hauptflächen, zwei Seitenflächen und zwei gegenüberliegende Stirnflächen.

An einer der Stirnflächen 42 des Basiskörpers 41 dient eine Ausnehmung 43 der Aufnahme des Befestigungselements 34, 54, 64, 74. Die Ausnehmung 43 entsteht gedanklich, indem ein in der Stirnfläche 42 liegendes Sechseck mit drei jeweils zueinander parallelen Seitenpaaren in Richtung der Längsachse des Basiskörpers 41 in diesen hineingeschoben wird. Zwei der sechs Seiten des Sechsecks sind sowohl Teil der Stirnfläche 42 als auch Teil der Hauptfläche des Basiskörpers 41. Der Basiskörper 41 kann alternativ im Bereich der Ausnehmung einfach oder mehrfach gekröpft sein, um an schwer zugängliche Bereiche zu kommen.

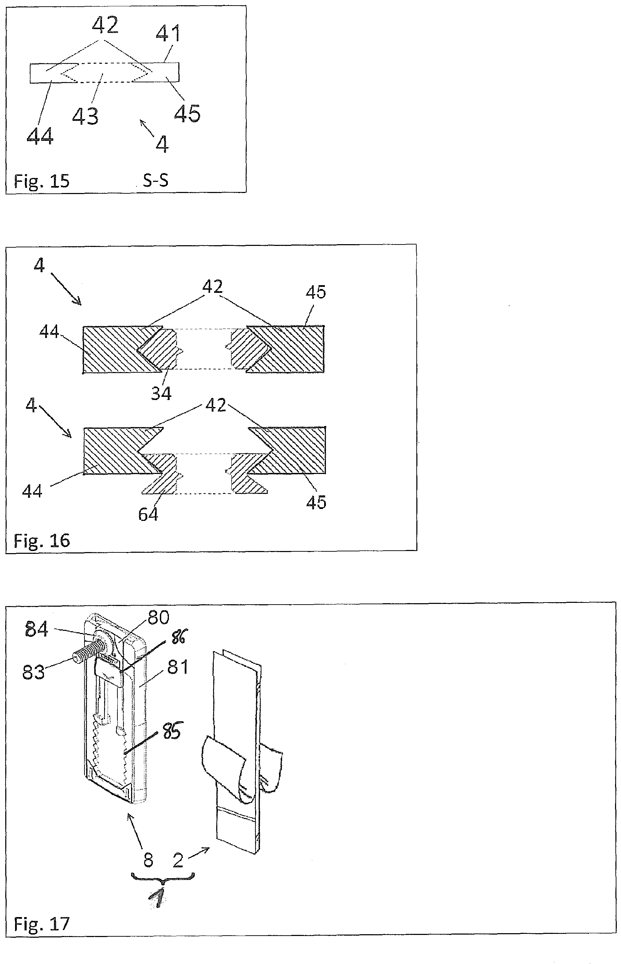

Die Schnittbilder in Fig. 14 und Fig. 15 verdeutlichen die Lage der Geometrie der die Aufnahme 43 bildenden Ausnehmung in Bezug zur Stirnfläche 42 des Basiskörpers 41.

Fig. 16 zeigt beispielhaft die Lage verschiedener Befestigungselemente 34, 54, 64, 74 in der Aufnahme 43 des Montagehilfsmittels 4. Bezüglich eines Befestigungselements 34, 54, 64 greift das Montagehilfsmittel 4 ähnlich einem Gabelschlüssel bei einer Gewindemutter radial ein. Im Gegensatz zu einer Gewindemutter werden aber vor allem axiale Kräfte auf die Befestigungselemente 34, 54, 64, 74 ausgeübt. Die flankierenden Wangen 44, 45 des Montagehilfsmittels 4 nehmen dabei das Delta- oder M-Profil des jeweiligen Befestigungselements 34, 54, 64 zwischen sich formschlüssig auf. Das jeweilige Befestigungselement 34, 54, 64, 74 kann zwischen den flankierten Wangen 44, 45 des Montagehilfsmittels 4 axial auf den Gewindebolzen 33 aufgeschoben werden. Nach Erreichen der gewünschten Position wird das Montagehilfsmittel 4 radial vom jeweiligen Befestigungselement 34, 54, 64, 74 abgezogen. Durch ein geringes Untermaß der zwischen den Wangen liegenden Aufnahme 43 kann optional ein leichtes Festklemmen des entsprechenden Befestigungselements 34, 54, 64, 74 in der Aufnahme des Montagehilfsmittels 4 mit der Möglichkeit einer reibschlüssigen Kraftübertragung realisiert werden.

Fig. 17 zeigt eine weitere Ausführungsform einer erfindungsgemäßen Haltevorrichtung 1. Anstelle des in Fig. 1 dargestellten Haltekörpers 3 umfasst die Haltevorrichtung 1 einen alternativen Haltekörper 8. Der Haltekörper 8 weist eine Basisplatte 81, eine Tragplatte 80, einen mit der Tragplatte 80 verbundenen Gewindebolzen 83 und ein Befestigungselement 84 auf. Die Tragplatte 80 ist in einem vertikalen Führungskanal 85 der Basisplatte 81 verschiebbar gelagert und durch ein Sperrelement 86 feststellbar. Somit kann die Lage des Gewindebolzens 83 und damit des aufzuhängenden Gegenstandes auch nach einem Anbringen der Basisplatte mittels des doppelseitig selbstklebenden Klebestreifens 2 auf der Oberfläche angepasst werden.

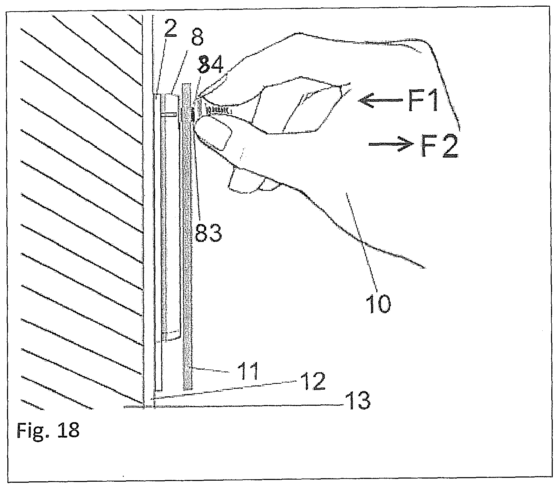

Fig. 18 zeigt einen bereits mit dem doppelseitig selbstklebenden Klebestreifen 2 auf einer Oberfläche 12 einer Wand 13 befestigten und höhenverstellbaren Haltekörper 8. Am Gewindebolzen 83 des Haltekörpers 8 hängt beispielhaft ein flacher Gegenstand 11, der durch ein Befestigungselement 84 gegen eine Bewegung weg von der Wand 13 gesichert werden kann. Zwischen den Fingerbeeren einer Hand 10 kann das Befestigungselement 34, 84 durch Aufbringen einer normal zur Wand ausgerichteten Aufschiebekraft F1 auf den Gewindebolzen 83 montiert werden, ohne das Befestigungselement 84 zu drehen. Dabei werden keine Torsionskräfte auf den doppelseitigen Klebestreifen 2 übertragen.

In ähnlicher Weise kann das Befestigungselement 84 gelöst werden, indem das Befestigungselement 84 zwischen den Fingerspitzen der Hand 10 an seinen Mantel- oder Stirnflächen ergriffen und von dem Gewindebolzen 83 mit einer Abzugskraft F2 in Richtung der Achse des Gewindebolzens 83 abgezogen wird. Dabei ist die Abzugskraft durch die vorgeschlagene Lösung begrenzt und abhängig vom Gewindeinnendurchmesser. So ergibt sich beispielsweise bei einem Gewinde M4 eine maximale axiale Abzugskraft F2 von 5 - 10 N, also maximal (B x 200 N) / m. Zudem ist die Abzugskraft F2 abhängig von der rückseitigen Klebefläche, also der Rückfläche 35 des Haltekörpers 3, 8. Ebenso kann das Befestigungselement 84 zwischen Daumen und einem weiteren Finger der Hand 10, insbesondere zwischen der fleischigen Innenseite eines distalen Fingerglieds des Daumens und der Fingerbeere des Zeigefingers im Präzisionsgriff erfasst und auf den Gewindebolzen 83 durch Drehen im Uhrzeigersinn aufgeschraubt werden. Entsprechend kann das Befestigungselement 84 durch Drehen entgegen dem Uhrzeigersinn gelöst werden. Beim linearen Aufstecken oder Abziehen des Befestigungselements 84 auf den Gewindebolzen 83 verformt sich dieser elastisch, jedes Mal, wenn die Wendelrippe 342 des Befestigungselements 84 einen Gewindegang des Gewindebolzens 83 überspringt. Dabei ist ein Reibungskoeffizient zwischen der Fingerbeere der Hand und dem Befestigungselement 84 durch die Materialwahl und die Oberfläche des Befestigungselements 84 definiert.

Die Aufschiebekraft F1 kann wie die Abzugskraft F2 bei gegebenen Herstellungsmaterialien durch die Anpassung der Gewindetragtiefe von Gewindebolzen 83 und Wendelrippe 342 angepasst werden. Die Kräfte F1 und F2 sind bei symmetrischen Gewindeprofilen annähernd gleich groß. Sollte in der Abzugs- oder Aufschieberichtung ein größerer Kraftaufwand gefordert sein, kann als Profil der Wendelrippe 342 ein asymmetrisches Profil gewählt werden, insbesondere ein Profil eines Sägegewindes. Bei einem Sägegewinde ergibt sich dann ein Effekt, der ähnlich bei einer Klinkensperre auftritt.

Alternativ können die notwendigen Kräfte F1 und F2 verringert werden, indem statt einer kontinuierlichen Wendelrippe 342 eine periodisch unterbrochene Wendelrippe 342 an die Innenfläche 345 des Befestigungselements 34, 54, 64, 84 angeformt ist. Um sensible Oberflächen 12 wie Papiertapeten beim Entfernen des Befestigungselements 34, 54, 64, 74, 84 nicht zu beschädigen, sollte die notwendige Abzugskraft F2, die über die haftklebrigen Hauptflächen 22, 23 des Klebestreifens 2 auf die Oberfläche 12 wirkt, einen gewissen Schwellenwert nicht überschreiten. Versuche haben gezeigt, dass die Höhe dieses Schwellenwertes, bei dem sensible Tapeten beginnen zu reißen, signifikant mit der Breite des verwendeten Klebestreifens 2 korreliert.

Das Befestigungselement 34, 54, 64, 74, 84 sollte einer axialen Kraft widerstehen, um einen damit auf den Gewindebolzen 33, 83 gesicherten Gegenstand zu halten. Gut bewährt hat sich in dem Fall, dass der Haltekörper 3, 8 mit nur einem doppelseitig selbstklebenden Klebestreifen 2 der Breite B und der Länge L verklebt wird. Dabei entspricht die Länge des Klebestreifens 2 vorzugsweise der Länge des Haltekörpers 3. Dabei ergibt sich für die Verklebung ein Bereich für die Abzugskraft F2 von minimal (2 x B) N/cm und maximal (10 x B) N/cm. Entsprechend vervielfacht sich der Bereich der Abzugskraft F2 bei der Verwendung einer Anzahl n von identischen doppelseitig selbstklebenden Klebestreifen 2 zur Verklebung des Haltekörpers 3, 8 auf einer Oberfläche 12, wobei mehrere Klebestreifen 2 vorzugsweise parallel entlang der Rückfläche 35 des Haltekörpers 3, 8 angeordnet werden und sich in ihrer Länge jeweils über die Länge des Haltekörpers 3, 8 erstrecken.

Für den Anwendungsfall einer Montage des Befestigungselements 34, 54, 64, 74, 84 durch eine schraubende Bewegung auf dem Gewindebolzen 33, 83 erlaubt das Befestigungselement 34, 54, 64, 74, 84 ein Anziehdrehmoment bis hin zu einem festgelegten Grenzwert. Auch dieser Grenzwert sollte konstruktiv abhängig von der Breite des damit verwendeten doppelseitig selbstklebenden Klebestreifens 2 gewählt werden und maximal (100 x B) N betragen. Auch hier vervielfacht sich der Wert bei der Verwendung einer Mehrzahl von identisch doppelseitig selbstklebenden Klebestreifen 2 zur Verklebung des Haltekörpers 3, 8 auf der Oberfläche 12. Das Anziehdrehmoment ist dabei durch die Elastizität des Befestigungselements 34, 54, 64, 74, 84 im Bereich der Öffnung 348 begrenzt, indem die Wendelrippe 342 aufgrund ihrer Elastizität ab einer bestimmten Flächenpressung die Gewindegänge des Außengewindes 331 des Gewindebolzens 83 überspringt und dadurch keine Zustellbewegung des Befestigungselements 34, 54, 64, 74, 84 mehr möglich ist.

Sollte nach dem Anhängen eines Gegenstands an den Gewindebolzen 33, 83 die Zugänglichkeit zu dem Gewindebolzen 33, 83 erschwert sein, kann das in Fig. 13 bis Fig. 16 gezeigte Montagehilfsmittel 4 verwendet werden. Das Befestigungselement 34, 54, 64, 74, 84 wird dazu in die Aufnahme 43 des Montagehilfsmittels 4 gelegt und in eine Position koaxial zum Gewindebolzen 33, 83 gebracht. Dann wird das Montagehilfsmittel 4 parallel zum Gewindebolzen 33, 83 in Richtung zur Oberfläche 12 geführt und nach dem Erreichen der gewünschten Position radial vom Befestigungselement 34, 54, 64, 74, 84 abgezogen. Das Montagehilfsmittel 4 kann analog auch zum Entfernen des Befestigungselements 34, 54, 64, 74, 84 verwendet werden.

Als Herstellungsmaterial für den Haltekörper 3, 8 und den damit verbundenen Gewindebolzen 33, 83 ist ein Kunststoffmaterial vorgesehen, welches abhängig von verschiedenen Faktoren und Einsatzorten ausgewählt werden kann. Für den Fall, dass die Tragplatte 30, 80 einstückig mit der Basisplatte 31, 81 ausgeführt ist, sollte das Herstellungsmaterial kompatibel mit der Klebstoffzusammensetzung des doppelseitig selbstklebenden Klebestreifens 2 sein und daran zuverlässig haften. Ferner sollte das Herstellungsmaterial einen Widerstand gegen die gängigsten Umwelteinflüsse wie Feuchtigkeit, UV-Strahlung oder Ozon- und Abgasbelastung aufweisen, ohne dass sich seine Materialeigenschaften in angemessener Zeit wesentlich verschlechtern. Eine niedrige Wasseraufnahme ist für die Anwendung in Nasszellen wünschenswert, da eine Wasseraufnahme des Haltekörpers in der Regel die Güte der Verklebung schwächt.

Ein Material, welches diese Anforderungen erfüllt und mit doppelseitig selbstklebenden Klebestreifen harmoniert, ist Polystyrol. Die nachteilige Neigung zur Spannungsrissbildung bei Polystyrol kann durch Verwendung spezieller Qualitäten wie High Impact Polystyrol (HIPS), syndiotaktisches Polystyrol oder faserverstärkte Polystyrol-Sorten reduziert werden. Dabei ist ein Glasfaseranteil von 15% - 35% vorteilhaft. Polystyrol zeichnet sich durch eine geringe Wasseraufnahme, hohe Festigkeit und die Möglichkeit der einfachen Verarbeitung als Spritzgussteil aus. Alternativ sind als Herstellungsmaterialien auch Styrol-Acrylnitril (SAN), Acrylester-Styrol-Acrylnitril (ASA), Acrylnitril-Butadien-Styrol (ABS) und faserverstärktes, insbesondere glasfaserverstärktes, Acrylnitril-Butadien-Styrol möglich. Alternativ können auch karbonfaserverstärkte Kunststoffe, insbesondere karbonfaserverstärktes Epoxidharz oder karbonfaserverstärkte Polyetheretherketone (PEEK), verwendet werden. Alternativ kann der Haltekörper 3, 8 auch aus Stahl, insbesondere Edelstahl, einer Aluminiumlegierung oder einer Titanlegierung ausgeführt werden.

Das Befestigungselement 34, 54, 64, 74, 84 ist aus einem Elastomer, vorzugsweise aus einem thermoplastischen Elastomer (TPE), hergestellt. Thermoplastische Elastomere bieten hinsichtlich der einfachen und wirtschaftlichen Verarbeitbarkeit im Spritzgussverfahren Vorteile. Besonders bevorzugt wird das Befestigungselement 34, 54, 64, 74, 84 aus einem thermoplastischen Polyurethan (TPU), welches mit weiteren Stoffen versetzt, gefüllt oder verstärkt sein kann, ausgeführt. Thermoplastisches Polyurethan weist eine hohe Abriebbeständigkeit, eine hohe UV-Beständigkeit und einen hohen Weiterreißwiderstand auf.

Thermoplastische Elastomere sind in verschiedenen Härtegraden verfügbar. Als vorteilhaft hat sich für das Herstellungsmaterial des Befestigungselements 34, 54, 64, 74, 84 die Wahl von Ausgangsmaterialien in einem Härtebereich mit einer erfindungsgemäßen Shore-A Härte zwischen 58 und 94 gemäß DIN 53505 gezeigt. Bevorzugt ist das thermoplastische Elastomer mit Ruß gefüllt und weist eine Härte von ca. 76 Shore-A auf. Diese Shore-A Härte liegt in einem Bereich, der die vergleichbare Shore-A Härte einer menschlichen Fingerbeere, die etwa zwischen 30 und 50 Shore-A liegend angenommen werden kann, übertrifft.

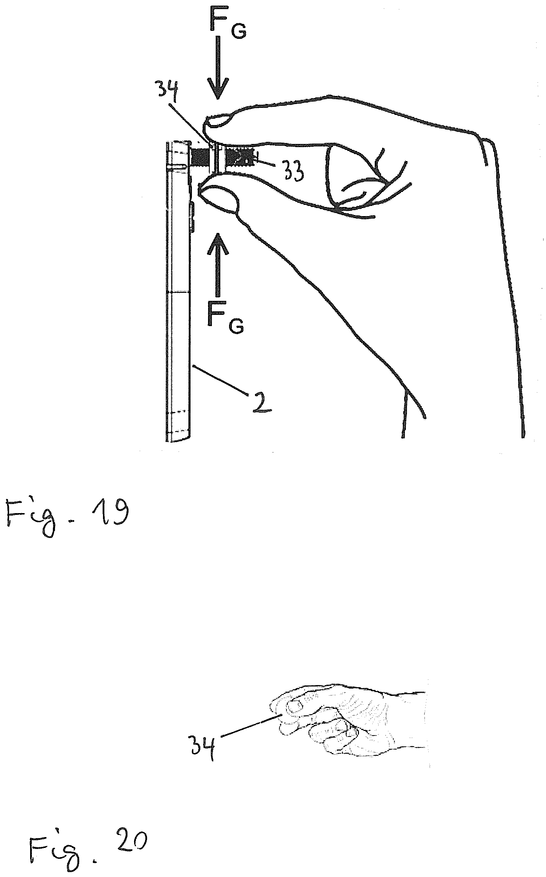

Im Folgenden sei noch die aufzuwendende Griffkraft für das Befestigungselement, insbesondere anhand der Fig. 19 und Fig. 20, genauer erläutert.

Griffkräfte während des Schraubvorgangs und während des Abziehens des Befestigungselements:
Das Befestigungselement 34 wird typischerweise im Präzisionsgriff an zwei radial gegenüberliegenden Außenbereichen bidigital zwischen Daumen und Zeigefinger erfasst, siehe Fig. 19. Unmittelbar vor Beginn einer Schraub- oder Abziehbewegung beträgt die von den opponierten Fingerbeeren radial auf das Außenprofil des Befestigungselement 34 ausgeübte Kraft üblicherweise 2 x F_{G} = 2 x 5 N = 10 N.

Dabei sinken zwei gegenüberliegende Segmente des Außenprofils in das Gewebe der Fingerbeeren ein, so dass sich die Kontaktflächen zwischen den Fingerbeeren und dem Befestigungselement 34 vergrößern, bezogen auf die Kontaktfläche, die sich einstellen würde, wenn die Fingerbeeren sich nicht deformieren würden und das Befestigungselement 34 nicht in das Gewebe der Fingerbeeren einsinken würde. Das Befestigungselement ist so dimensioniert, dass diese Kontaktflächen beispielsweise 0,4 cm² betragen, also im bidigitalen Präzisionsgriff 0,2 cm² pro Fingerbeere. Dies sorgt dafür, dass das Befestigungselement 34, das sich auch selbst dabei verformt, bequem und schmerzfrei ergriffen werden kann.

### Übertragbares Drehmoment auf das Befestigungselement:

Rechnerisch kann das bei einem angenommenem Haftreibungskoeffizienten µ = 1 und zwei Hebelarmen HA in der Länge des halben Außendurchmessers ohne Abrutschen der Fingerbeeren im bidigitalen Griff maximal übertragbare Drehmoment bei einer radialen Haltekraft von 2 x 5 N beispielsweise 2 x (F_{G} x µ x HA) = 2 x (5 N x 1 x 0,0045 m) = 0,045 Nm betragen.

### Betrachtung des Schraubvorgangs:

Drei Fälle lassen sich beim Schraubvorgang im bidigitalen Daumen-Fingergriff unterscheiden.
1. Drehung des Befestigungselements 34 um die Achse des Gewindebolzens 33 resultiert nach Ergreifen des Befestigungselements 34 aus einer Drehung des Handgelenks. Es gibt dann keine Relativbewegung zwischen den Fingerbeeren des Daumens und des Zeigefingers.
2. Drehung des Befestigungselements 34 durch Abrollen an den Fingerbeeren. Die Fingerbeeren von Daumen und Zeigefinger bewegen sich dann relativ zueinander gegenläufig. Das Befestigungselement 34 dreht sich dazwischen um die Achse des Gewindebolzens 33. Das Handgelenk muss sich in diesem Fall nicht bewegen.
3. Kombination von 1. und 2.

Alternativ kann das Befestigungselement 34 auch im tridigitalen Fingergriff vom Benutzer erfasst werden, siehe Fig. 20.

### Betrachtung des Abziehens oder Aufsteckens:

Anders als beim Schraubvorgang können die Fingerbeeren mit dem Befestigungselement 34 beim Abziehen oder Aufstecken des Befestigungselements 34 zusätzlich im Formschluss zusammenwirken. So kann das Befestigungselement 34 beim Abziehen von den Fingerspitzen hintergriffen werden. Auch das Erfassen des ringförmigen Außendurchmessers des Befestigungselements zwischen dem Ende einer Fingerbeere und der Unterseite des Nagels, wie beispielsweise in Fig. 18 angedeutet, ist möglich.

Ohne Formschlusseffekte muss die Abzugskraft durch Haftreibung von den Fingerbeeren auf das Befestigungselement 34 übertragen werden. Bei einer beispielhaft angenommenen radialen Haltekraft von 2 x 5 N = 10 N und einem angenommenen Haftreibungskoeffizienten von µ = 1 können maximal 10 N Zug(normal)kraft auf die Verklebung wirken, denn ansonsten würden die Finger der Hand vom Befestigungselement 34 abrutschen. Das bedeutet auch, dass bei den genannten Voraussetzungen maximal 10 N ausreichen sollen, um das Befestigungselement 34 auf der Gewindestange axial bewegen zu können.

## Patentansprüche

1. Haltevorrichtung (1) zur klebenden Befestigung an einer Oberfläche umfassend zumindest einen doppelseitig selbstklebenden Klebestreifen (2) mit einem Haltekörper (3) und einem zugeordneten Befestigungselement (34), wobei der Haltekörper (3) eine Basisplatte (31) mit einer Rückfläche (35) und einen über die Basisplatte (31) hervorstehenden Gewindebolzen (33) aufweist, wobei das Befestigungselement (34) an dem Gewindebolzen (33) des Haltekörpers (3) anbringbar ist,
**dadurch gekennzeichnet, dass**
das Befestigungselement (34) aus einem Elastomer mit einer Shore-A Härte zwischen 58 und 94 hergestellt ist und eine durchgängige Öffnung (348) aufweist und zumindest im Bereich der Öffnung (348) elastisch ausgebildet ist und eine die durchgängige Öffnung (348) begrenzende Innenfläche (345) des Befestigungselements (34) ein Profil einer Wendelrippe (342) aufweist, und wobei die Öffnung (348) einen Innendurchmesser aufweist, welcher im Verhältnis zu einem Außendurchmesser des Gewindebolzens (33) derart ausgestaltet ist, dass sich das Befestigungselement (34) auf den Gewindebolzen (33) sowohl durch eine lineare Bewegung aufstecken bzw. abziehen als auch durch eine drehende Bewegung auf- bzw. abschrauben lässt und das Befestigungselement (34) wenigstens im Bereich der Öffnung (348) durch eine Kraft derart verformbar ist, dass sich das Befestigungselement (34) in einem verformten Zustand auf den Gewindebolzen (33) aufstecken bzw. abziehen lässt und in einem unverformten Zustand auf den Gewindebolzen (33) aufschrauben bzw. abschrauben lässt.

2. Haltevorrichtung (1) nach Anspruch 1, **dadurch gekennzeichnet, dass** das Befestigungselement (34) aus einem thermoplastischen Elastomer hergestellt ist.

3. Haltevorrichtung (1) nach Anspruch 1 oder 2, **dadurch gekennzeichnet, dass** das Profil auf einer Schraubenlinie mit der Steigung P und einem Winkelbereich ϕ von mindestens 270° und maximal 360° um eine Achse (346) des Befestigungselements (34) ausgebildet ist.

4. Haltevorrichtung (1) nach einem der Ansprüche 1 bis 3, **dadurch gekennzeichnet, dass** der Gewindebolzen (33) ein Außengewinde (331) mit einer Steigung P kleiner 1 ,5 mm, vorzugweise einer Steigung P zwischen 0,25 mm und 1 mm, aufweist.

5. Haltevorrichtung (1) nach einem der Ansprüche 1 bis 4, **dadurch gekennzeichnet, dass** der Gewindebolzen (33) einen Nenndurchmesser D zwischen 2 mm und 8 mm, vorzugzugsweise zwischen 3 mm und 8 mm, besonders bevorzugt zwischen 3 mm und 4 mm, aufweist.

6. Haltevorrichtung (1) nach einem der Ansprüche 1 bis 5, **dadurch gekennzeichnet, dass** das Außengewinde (331) des Gewindebolzens (33) gegenüber einem Normgewinde eine verringerte Gewindeprofiltiefe aufweist.

7. Haltevorrichtung (1) nach einem der Ansprüche 1 bis 6, **dadurch gekennzeichnet, dass** eine Tragplatte (30, 80) des Haltekörpers (3, 8) den Gewindebolzen (33, 83) trägt und relativ zu der Basisplatte (31) verschiebbar, insbesondere entlang der Hauptlastrichtung verschiebbar, ist.

8. Haltevorrichtung (1) nach einem der Ansprüche 1 bis 7, **dadurch gekennzeichnet, dass** ein äußeres Profil des Befestigungselements (34, 64, 74) sägezahnförmig, dreiecksförmig oder doppeldreiecksförmig ausgebildet ist.

9. Haltevorrichtung (1) nach einem der Ansprüche 1 bis 8, **dadurch gekennzeichnet, dass** sich das Befestigungselement (34) mit einer Zugkraft F2 von zwischen minimal [2n x B] N/cm und maximal [10n x B] N/cm abziehen lässt, wobei n die Anzahl der verwendeten doppelseitig selbstklebenden Klebestreifen (2) und B die Breite eines der doppelseitig selbstklebenden Klebestreifen (2) ist.

10. Haltevorrichtung (1) nach einem der Ansprüche 1 bis 9, **dadurch gekennzeichnet, dass** der doppelseitig selbstklebende Klebestreifen (2) eine Breite B und eine Länge L aufweist, wobei die Länge L größer als die Breite B ist, und ein Außengewinde (331) des Gewindebolzen (33) eine Steigung von maximal 0,01 x L aufweist.

11. Haltevorrichtung (1) nach einem der Ansprüche 1 bis 10, **dadurch gekennzeichnet, dass** ein zum Aufschrauben oder Abschrauben des Befestigungselements (34) erforderliches Drehmoment maximal [100n x B] N beträgt, wobei n die Anzahl der doppelseitig selbstklebenden Klebestreifen (2) und B die Breite eines der doppelseitig selbstklebenden Klebestreifen (2) ist.

## Claims

1. Holding device (1) for adhesive fastening to a surface comprising at least one double-sided self-adhesive strip (2) having a holding body (3) and an associated fastening element (34), wherein Holding body (3) has a base plate (31) with a rear surface (35) and a threaded bolt (33) protruding above the base plate (31), wherein the fastening element (34) can be attached to the threaded bolt (33) of Holding body (3), **characterized in that** the fastening element (34) is made from an elastomer having a Shore A hardness of between 58 and 94 and has a through opening (348) and is designed so that it is elastic at least in the region of the opening (348) and an inner surface (345), limiting the through opening (348), of the fastening element (34) has a profile of a helical rib (342), and wherein the opening (348) has an internal diameter which is configured in relation to the external diameter of the threaded bolt (33) in such a way that the fastening element (34) can both be pushed onto the threaded bolt (33) and pulled off it by a linear movement and be screwed onto it and unscrewed from it by a turning movement and the fastening element (34) can be deformed, at least in the region of the opening (348), by a force in such a way that the fastening element (34) can, in a deformed state, be pushed onto the threaded bolt (33) and pulled off it and, in an undeformed state, can be screwed onto or unscrewed from the threaded bolt (33).

2. Holding device (1) according to Claim 1, **characterized in that** the fastening element (34) is made from a thermoplastic elastomer.

3. Holding device (1) according to Claim 1 or 2, **characterized in that** the profile is designed on a helical curve with the pitch P and an angular range ϕ of at least 270° and no more than 360° about an axis (346) of the fastening element (34).

4. Holding device (1) according to one of Claims 1 to 3, **characterized in that** the threaded bolt (33) has an external thread (331) with a pitch P less than 1.5 mm, preferably a pitch P between 0.25 mm and 1 mm.

5. Holding device (1) according to one of Claims 1 to 4, **characterized in that** the threaded bolt (33) has a nominal diameter D of between 2 mm to 8 mm, preferably between 3 mm and 8 mm, particularly preferably between 3 mm and 4 mm.

6. Holding device (1) according to one of Claims 1 to 5, **characterized in that** the external thread (331) of the threaded bolt (33) has a thread profile depth which is reduced compared with a standard thread.

7. Holding device (1) according to one of Claims 1 to 6, **characterized in that** a support plate (38, 80) of Holding body (3, 8) bears the threaded bolt (33, 83) and can be displaced relatively with respect to the base plate (31), in particular in the direction of the main load.

8. Holding device (1) according to one of Claims 1 to 7, **characterized in that** an outer profile of the fastening element (34, 64, 74) is designed with a sawtoothed, triangular or double-triangular shape.

9. Holding device (1) according to one of Claims 1 to 8, **characterized in that** the fastening element (34) can be pulled off with a tensile force F2 of between at least [2n x B] N/cm and no more than [10n x B] N/cm, wherein n is the number of the double-sided self-adhesive strips (2) used and B the width of one of the double-sided self-adhesive strips (2).

10. Holding device (1) according to one of Claims 1 to 9, **characterized in that** the double-sided self-adhesive strip (2) has a width B and a length L, wherein the length L is greater than the width B, and an external thread (331) of the threaded bolt (33) has a pitch of no more than 0.01 x L.

11. Holding device (1) according to one of Claims 1 to 10, **characterized in that** a torque required to screw on or unscrew the fastening element (34) is no more than [100n x B] N, wherein n is the number of double-sided self-adhesive strips (2) and B is the width of one of the double-sided self-adhesive strips (2).

## Revendications

1. Dispositif de retenue (1) destiné à une fixation adhésive sur une surface, comprenant au moins un ruban adhésif autocollant double face (2) avec un corps de retenue (3) et un élément de fixation associé (34), le corps de retenue (3) présentant une plaque de base (31) avec une surface arrière (35) et un boulon fileté (33) faisant saillie au-delà de la plaque de base (31), l'élément de fixation (34) pouvant être appliqué contre le boulon fileté (33) du corps de retenue (3), **caractérisé en ce que**
l'élément de fixation (34) est fabriqué à partir d'un élastomère ayant une dureté Shore A comprise entre 58 et 94 et présente une ouverture traversante (348) et est réalisé de manière élastique au moins dans la région de l'ouverture (348) et une surface intérieure (345) de l'élément de fixation (34) limitant l'ouverture traversante (348) présente le profil d'une nervure hélicoïdale (342) et l'ouverture (348) présentant un diamètre intérieur qui, par rapport à un diamètre extérieur du boulon fileté (33), est configuré de telle sorte que l'élément de fixation (34) puisse à la fois être enfiché ou retiré sur le boulon fileté (33) par un mouvement linéaire et être vissé ou dévissé par un mouvement de rotation et l'élément de fixation (34) pouvant être déformé au moins dans la région de l'ouverture (348) par une force de telle sorte que l'élément de fixation (34) puisse être enfiché ou retiré dans un état déformé sur le boulon de fileté (33) et puisse être vissé ou dévissé dans un état non déformé sur le boulon fileté (33).

2. Dispositif de retenue (1) selon la revendication 1, **caractérisé en ce que** l'élément de fixation (34) est fabriqué à partir d'un élastomère thermoplastique.

3. Dispositif de retenue (1) selon la revendication 1 ou 2, **caractérisé en ce que** le profilé est réalisé sur une ligne hélicoïdale de pas P et de plage angulaire ϕ d'au moins 270° et d'au plus 360° autour d'un axe (346) de l'élément de fixation (34).

4. Dispositif de retenue (1) selon l'une quelconque des revendications 1 à 3, **caractérisé en ce que** le boulon fileté (33) présente un filetage extérieur (331) avec un pas P inférieur à 1,5 mm, de préférence un pas P compris entre 0,25 mm et 1 mm.

5. Dispositif de retenue (1) selon l'une quelconque des revendications 1 à 4, **caractérisé en ce que** le boulon fileté (33) présente un diamètre nominal D compris entre 2 mm et 8 mm, de préférence entre 3 mm et 8 mm, particulièrement préférablement entre 3 mm et 4 mm.

6. Dispositif de retenue (1) selon l'une quelconque des revendications 1 à 5, **caractérisé en ce que** le filetage extérieur (331) du boulon fileté (33) présente une profondeur de profilé fileté réduite par rapport à un filetage normé.

7. Dispositif de retenue (1) selon l'une quelconque des revendications 1 à 6, **caractérisé en ce qu'**une plaque de support (30, 80) du corps de retenue (3, 8) supporte le boulon fileté (33, 83) et peut être déplacée par rapport à la plaque de base (31), en particulier peut être déplacée le long de la direction de charge principale.

8. Dispositif de retenue (1) selon l'une quelconque des revendications 1 à 7, **caractérisé en ce qu'**un profil extérieur de l'élément de fixation (34, 64, 74) est réalisé en forme de dents de scie, sous forme triangulaire ou sous forme de double triangle.

9. Dispositif de retenue (1) selon l'une quelconque des revendications 1 à 8, **caractérisé en ce que** l'élément de fixation (34) peut être retiré avec une force de traction F2 comprise entre au moins [2n x B] N/cm et au plus [10n x B] N/cm, n étant le nombre des rubans adhésifs (2) autocollants double face utilisés et B étant la largeur de l'un des rubans adhésifs (2) autocollants double face.

10. Dispositif de retenue (1) selon l'une quelconque des revendications 1 à 9, **caractérisé en ce que** le ruban adhésif autocollant double face (2) présente une largeur B et une longueur L, la longueur L étant supérieure à la largeur B, et un filetage extérieur (331) du boulon fileté (33) présentant un pas d'au plus 0,01 x L.

11. Dispositif de retenue (1) selon l'une quelconque des revendications 1 à 10, **caractérisé en ce qu'**un couple nécessaire pour visser ou dévisser l'élément de fixation (34) vaut au maximum [100n x B] N, n étant le nombre des rubans adhésifs (2) autocollants double face et B étant la largeur d'un des rubans adhésifs (2) autocollants double face.
